# FASCICULE DE BREVET EUROPEEN

(11) **EP 1 084 484 B1**
(45) Date de publication et mention de la délivrance du brevet: **03.04.2002**
(21) Numéro de dépôt: 99923716.7
(22) Date de dépôt: 10.06.1999
(51) Int. Cl.: G07F 7/08, G06F 17/60

(54) **PROCEDE DE GESTION A DISTANCE PAR CARTE A PUCE**
FERNVERWALTUNGSVERFAHREN MITTELS EINER CHIPKARTE
REMOTE MANAGEMENT METHOD USING A CHIP CARD

(30) Priorité: 10.06.1998 FR 9807272
(43) Date de publication de la demande: 21.03.2001
(73) Titulaire: Schiltz, Patrick, 92700 Colombes (FR)
(72) Inventeur: Schiltz, Patrick, 92700 Colombes (FR)
(74) Mandataire: Schmit, Christian Norbert Marie
(86) Numéro de dépôt international: FR9901377
(87) Numéro de publication internationale: WO9964994

(56) Documents cités:
- EP-A- 0 595 354
- EP-A- 0 715 245
- EP-A- 0 823 820
- WO-A-97/14085
- US-A- 5 577 100

## Description

La présente invention a pour objet un procédé de gestion à distance par carte à puce. Elle est utilisable aussi bien par des utilisateurs privés que par des utilisateurs industriels. Elle a pour objet d'organiser et de simplifier la gestion à distance des services, notamment la gestion des services sur le réseau Internet.

Dans le domaine de la consommation de services sur le réseau Internet, le problème à résoudre est celui du paiement du service par des utilisateurs. La gestion de tels paiements est confrontée à des difficultés liées au caractère virtuel des services accessibles sur Internet, et à la multitude des accès divers. Le but de l'invention sera dans ce domaine d'atteindre à un paiement raisonnable du service à défaut d'être rigoureux. En outre, la gestion doit être simplifiée le plus possible de façon à limiter les interventions administratives pour des opérations qui, économiquement, n'ont par ailleurs pas beaucoup de rendement.

L'invention a pour objet de remédier à ces inconvénients en proposant un procédé de gestion par carte à puce. Le principe de l'invention consiste à l'issue d'une première lecture d'une carte à puce à autoriser l'accès au service pour une première session. Puis la quantité de service consommée au cours de cette première session est mesurée. Ensuite, au moins lorsque l'utilisateur vient pour une seconde session consommer le même service ou un service équivalent, on décompte dans sa carte (ou dans un fichier du système correspondant à sa carte) des unités prépayées correspondant au service consommé à la première session. Ainsi de suite pour chaque session suivante. Il y donc deux accès nettement séparés dans le temps, deux lectures de la carte à puce, pour prendre en compte le début de la mesure d'une part, et le paiement d'autre part.

L'invention a donc pour objet un procédé de gestion à distance de la délivrance d'un service sur le réseau Internet par un système comportant dans l'ordre les étapes suivantes :
- au début d'une session de consommation, un utilisateur introduit une carte à puce munie d'unités prépayées qu'il détient et contenues dans la carte ou dans un fichier du système correspondant à la carte dans une borne en relation avec le système et qui gère l'accès au service,
- la borne lit la carte à puce, puis autorise un accès au service,
- le système mesure la consommation de service de la session et produit et mémorise un message relatif à cette mesure,
- au cours d'une lecture suivante de la même carte à puce le système enregistre ce message dans un fichier en relation avec la carte à puce,
caractérisé en ce que
- la lecture suivante de la même carte à puce se produit préalablement au début d'une deuxième session de consommation du service, et en ce que le message est un message de décompte d'unités prépayées disponibles contenues dans la carte à puce ou dans un fichier du système correspondant à la carte.

L'invention sera mieux comprise à la lecture de la description qui suit à le et à l'examen des figures qui l'accompagnent. Celles-ci ne sont présentées ceste qu'à titre indicatif et nullement limitatif de l'invention. Les figures montrent:
Figure 1 : une représentation en détail du procédé de gestion mis en oeuvre;
Figure 2 : une représentation du procédé de gestion des services sur le réseau Internet;
Figure 3 : un logigramme du procédé de gestion à distance par carte à puce selon l'invention.

Le procédé selon l'invention comporte une double lecture d'une même carte à puce munie d'unités prépayées pour prendre en compte une seule session de consommation. La consommation d'un service sur Intemet est particulière en ce sens qu'une seule borne d'accès (en entrée et en sortie du service) est prévue pour lire la carte à puce. Dans ce cas, chaque introduction de la carte correspondra alternativement au mode d'entrée et au mode de sortie. La borne peut être en pratique le clavier d'un ordinateur utilisable pour se connecter à Internet et qui est muni latéralement d'un lecteur de carte à puce. Tout autre circuit périphérique, interne ou externe au micro-ordinateur, et jouant ce rôle est cependant utilisable.

Une autre particularité d'Internet se réfère à la comptabilisation des consommations. Dans le cadre Internet, la consommation peut essentiellement être proportionnelle au temps de connexion. Mais tout autre moyen de mesure, comme un nombre de documents visualisés ou un nombre d'octets transmis, est également envisageable.

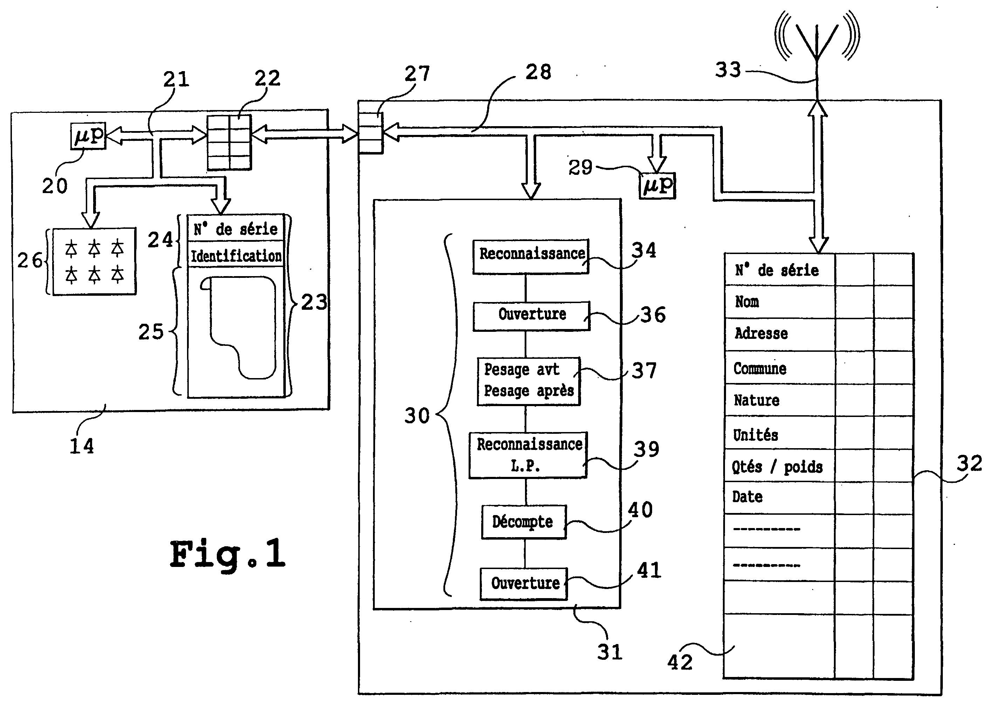

A la Fig. 1 une carte à puce 14 comporte de préférence un microprocesseur 20 relié par un bus 21 de données, d'adresses et de commandes, à un connecteur de cartes à puce 22, à une mémoire 23 pour contenir des données 24 et un programme 25, et à une mémoire 26 d'unités prépayées.

Le connecteur 22 entre en relation avec un connecteur 27 d'un lecteur enregistreur de la carte à puce 14 présente dans une borne de lecture en relation avec un micro-ordinateur qui présente la session Internel à l'utilisateur. Au besoin, la borne comporte une fente ménagée dans le clavier de ce micro-ordinateur. Dans la borne, le connecteur 27 est relié par un bus 28 du même type que le bus 21 à un microprocesseur 29. Le microprocesseur 29 exécute un programme 30 contenu dans une mémoire programme 31 et enregistre des messages dans une mémoire de données 32 de la borne. Les messages ont pour objet de mesurer la consommation de services par le titulaire de la carte à puce. Les messages peuvent par ailleurs être transmis par un modem, non représenté, en direction d'un centre de télégestion. Le modem est relié au centre de télégestion par un câble ou par une antenne 33. La liaison est périodique, par exemple journalière. La liaison peut être une liaison de type ligne téléphonique câblée.

Pour palier un défaut d'équipement des bornes, on peut aussi prévoir que les circuits 27-32 soient en fait contenus dans un serveur de données du prestataire de services qui met ses services à disposition sur un site du réseau Internet. Par l'intermédiaire du micro-ordinateur en session sur ce site, et du connecteur 27, ce serveur peut intervenir ou faire intervenir alors dans la carte à puce pour oblitérer des unités. De ce fait, le microprocesseur 29, la mémoire 31 et la mémoire 32 peuvent se trouver dans un premier micro-ordinateur à disposition du titulaire de la carte à puce 14, dans un deuxième micro-ordinateur qui sert de serveur pour un site Intemet visité par le titulaire de la carte à puce, ou encore et de préférence dans un troisième micro-ordinateur servant de centre de télégestion de ce site Internet visité.

Le programme 30 comporte une première instruction 34 exécutée lors d'un premier accès au service Internet. L'utilisateur introduit alors sa carte à puce dans le lecteur et celui-ci provoque, au cours de la session Internet gérée, une reconnaissance de la carte à puce. De manière préférée, la carte à puce peut faire elle-même une reconnaissance du lecteur. Des protocoles de reconnaissance de ce type sont connus, avec ou sans composition d'un code secret. Dans le cadre Internet, la composition de ce code secret joue un rôle d'autorisation de l'accès au service, notamment dans le cas où ce code secret aurait été communiqué à l'utilisateur par le fournisseur de service.

II peut par ailleurs être demandé à l'utilisateur de sélectionner par des touches du clavier la nature des services qu'il compte utiliser, ou d'indiquer d'autres informations utiles. En variante, cette sélection se fera à la fin de l'utilisation. Une fois les opérations de reconnaissance effectuées, l'accès au service est ouvert au cours d'une opération 36.

Au cours d'une opération ultérieure 37, dans un exemple une opération de mesure, la quantité de services consommés est mesurée. Comme indiqué, cette mesure peut être forfaitaire, subjective, par prise en compte d'une unité de passage, ou objective.

Dans le cadre d'lnternet, la deuxième lecture selon l'invention se situera de préférence préalablement au début d'une session suivante. Néanmoins dans ce cadre, la deuxième lecture de la carte à puce pourrait se situer durant la même session si l'opérateur n'a pas enlevé sa carte à puce entre temps.

Dans une variante préférée, le décompte 40, le message résultant de la consommation, comportera une commande adressée à la carte 14 pour oblitérer une ou plusieurs unités de la mémoire 26. Dans le cas où le décompte ne serait pas forfaitaire mais proportionnel, le nombre d'unités 26 à oblitérer est proportionnel à la quantité mesurée des services consommés. Si le décompte est forfaitaire, il sera effectué par lecture d'une table 42 présente dans la mémoire 32. La table 42 renseigne par avance, du fait d'un contrat préalable, sur le nombre d'unités à décompter chaque fois qu'un utilisateur reconnu se présente. Les unités de cet utilisateur peuvent être comptabilisées dans sa carte ou dans la mémoire 32. Dans ce cas la mémoire 32 établira un compte des unités prépayées restantes.

En variante, le message ne sera pas enregistré dans la carte à puce 14 (par oblitération de la mémoire 26), mais sera enregistré dans la mémoire 32. Celle-ci prélèvera les informations suivantes relatives à chaque utilisateur : numéro de série, nom de l'utilisateur, adresse de l'utilisateur, commune, nature des services consommés, date du jour, et ainsi de suite. Les unités décomptées, le cas échéant, sont relatives à ces informations prélevées. De ce fait, il sera possible de tenir un fichier et de gérer des situations aussi diverses que des abonnements de type proportionnels destinés à des industriels, ou des abonnements gratuits réservés à des utilisateurs privilégiés.

A l'issue de l'opération 40 de décompte et de constitution du message, on pourra autoriser une ouverture 41 suivante de l'accès au service.

Dans le cadre Internet, du fait que la communication avec l'utilisateur peut être coupée à tout moment (du fait de l'utilisateur lui-même ou du fait d'un défaut de l'installation de connexion à Internet), la prise en compte des unités pourra ne pas se faire avec certitude au cours de la session de consommation elle-même. Avec l'invention, en repoussant, au besoin, le paiement au début d'une session suivante on règle tous les problèmes. A sa prochaine utilisation, un utilisateur ne pourra accéder au service qu'après décompte dans sa carte des unités consommées la fois précédente.

En pratique le message enregistré dans la carte à puce dans le cadre Internet sera un message élémentaire : il consistera à oblitérer des unités prépayées déjà consommées antérieurement. Cette oblitération sera préalable à, et constituera la condition, d'une session de consommation suivante. Plutôt que de comptabiliser les unités dans la carte, on peut néanmoins les comptabiliser dans un fichier du système.

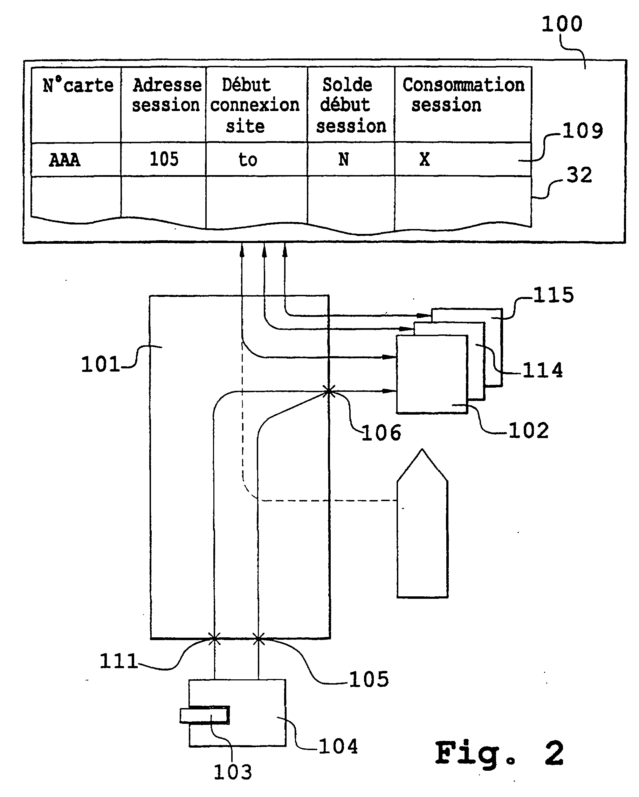

Dans un autre exemple, dans le cadre Internet, présenté figure 2, la mémoire 32 peut être gérée par, ou contenue dans un système central 100 relié, par exemple par le réseau Internet 101, au site 102. Le système central 100 gère une base de données contenue dans la mémoire 32. Un utilisateur possède une carte à puce 103 qui peut être introduite dans un lecteur 104. La carte à puce 103 possède dans une mémoire une information d'identification AAA.

Par l'intermédiaire de ce lecteur 104 et d'un modem contenu dans ce lecteur 104, l'utilisateur peut se connecter au réseau Internet 101. Cette connexion au réseau Internet affecte une adresse 105 au lecteur 104. Cette adresse 105 est une adresse virtuelle, par exemple elle est une adresse de type IP (Internet Protocol). Elle met à disposition du lecteur 104 une porte de transmission sur le réseau Internet 101. Cette adresse 105 est une adresse de session. En effet, à chaque nouvelle connexion sur le réseau Internet 101, un fournisseur d'accès affecte une nouvelle adresse spécifique à la session qui vient d'être ouverte. Ensuite, par exemple, l'utilisateur choisit de se connecter au site 102. Le site 102 possède lui aussi une adresse 106, qui s'agissant d'un site est permanente. Le réseau Internet 101 fait communiquer des informations entre les adresses 105 et 106 via une ou des routes.

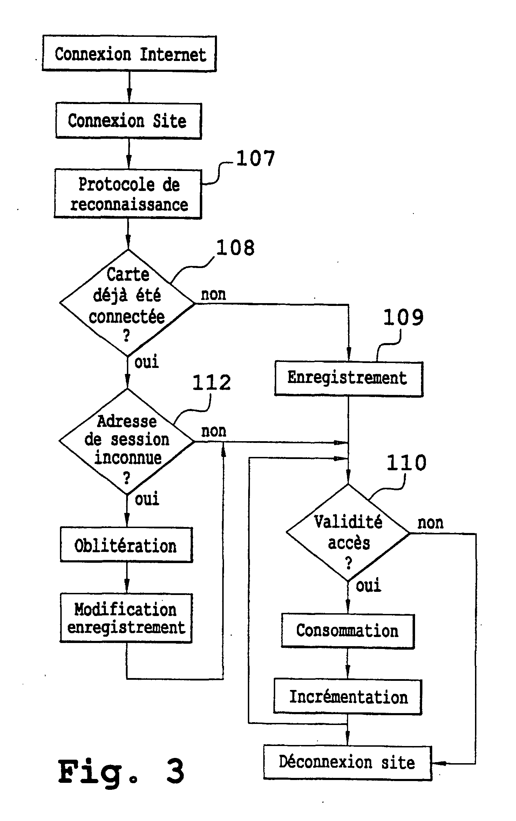

Le site 102 est à accès contrôlé. Lorsque l'utilisateur demande l'accès au site 102, le site 102 lance un protocole de reconnaissance 107, figure 3. Ce protocole de reconnaissance 107 comporte plusieurs identifications. Dans un premier temps, le protocole 107 prévoit une étape d'identification de la carte à puce 103. L'information d'identification AAA de la carte 103 est alors transmise au site 102. Cette information d'identification AAA peut être remplacée par un numéro de série portée par la carte 103. L'étape d'identification peut éventuellement comporter la saisie d'un mot de passe lié à cette carte 103 et ou au site 102. La carte 103 est préférentiellement une carte comportant des unités prépayées.

Ensuite le protocole 107 procède à une reconnaissance de l'adresse 105 virtuelle de session. Le protocole procède éventuellement à l'acquisition d'une date t0 à laquelle le lecteur 104 s'est connecté au site 102.

Ensuite, le procédé de gestion de ce site 102 prévoit un enchaînement logique de questions permettant l'accès réel aux services fournis par ce site 102. Notamment, au cours d'une première question 108, le site 102 interroge le système central 100 pour savoir si un utilisateur, par l'intermédiaire de la carte 103 (de référence AAA), a déjà eu accès au site 102. Si la carte 103 est neuve et n'a encore jamais servi pour un accès au site 102, alors on crée un enregistrement 109 dans la mémoire 32 en renseignant une première zone de cet enregistrement par l'identification AAA de la carte 103. Par ailleurs, dans cet enregistrement 109, on renseigne une deuxième zone par l'adresse de session 105, et, de préférence, une troisième zone par la date t0 de début de connexion du lecteur 104 au site 102. Au cours de cet enregistrement de l'enregistrement 109, on peut également prélever dans la carte une information N de solde d'unités encore disponibles dans cette carte, et l'inscrire dans une quatrième zone de l'enregistrement 109, et mettre à zéro une cinquième zone de cet enregistrement 109. Cette cinquième zone correspond à une zone de comptabilisation par incrément des services consommés pendant une session, et quantifiés sous forme de X unités de consommation.

Puis, la validité de l'accès peut être contrôlée par une deuxième question 110 optionnelle. Cette validité peut prendre la forme d'une évaluation du solde des N unités disponibles dans la carte 103 et d'une comparaison de ce solde à un solde minimal. Puis l'utilisateur consomme des services. En pratique, cette consommation correspond à des transmissions au lecteur 104 d'images et ou de sons numérisés mémorisés dans le site 102 et que l'utilisateur désigne avec un clavier du lecteur 104. Cette consommation aboutit à une incrémentation, dans la cinquième zone de l'enregistrement 109, du nombre d'unités consommées au cours de la session, au prorata des services transmis. En fin d'utilisation, l'utilisateur se déconnecte du site et ou du réseau Internet. La carte à puce 103 comporte alors un solde N, alors que des consommations X ont été réalisées. Ces consommations X sont gardées dans la cinquième zone de l'enregistrement 109 mémorisé dans la mémoire 32.

Au cours d'un accès ultérieur avec la même carte à puce 103 (par éventuellement un autre utilisateur, et éventuellement un autre lecteur), une autre adresse de session 111 est attribuée à la même carte à puce 103. Lors de sa deuxième connexion au site 102, cette carte 103 est reconnue à la question 108 comme ayant déjà permis un accès au site 102. En effet, un enregistrement 109 de la mémoire 32 comporte déjà des informations, AAA, 105, t0, et N, et surtout des informations sur les consommations X réalisées au cours de l'accès précédent. Alors le procédé de gestion selon l'invention prévoit une troisième question 112. La question 112 a pour but de comparer l'adresse de session 105, donnée au cours de l'accès précédent et mémorisée dans l'enregistrement 109, avec l'adresse de session 111 reconnue lors du protocole de reconnaissance 107 lancé par la deuxième connexion au site 102. Cette manière de faire présente l'avantage de considérer comme effectuées au cours d'une unique session toutes les consommations correspondant à une unique adresse de session (105) et donc autorise des visites intermédiaires sur d'autres sites que le site 102 pendant cette première session.

A la question 112, deux réponses sont possibles. Une première réponse est que l'adresse 105 de session est la même que celle contenue dans l'enregistrement 109, parce que deux consommations successives se sont produites au cours de cette même session 105. Dans ce cas, la validité de l'accès est éventuellement contrôlée à nouveau par la deuxième question 110, et ouvre ensuite sur une possibilité de consommation. Dans ce cas, la deuxième question 110 peut servir à vérifier que les consommations X déjà réalisées au cours de la session commencée sont inférieures au solde N.

Une deuxième réponse possible à la question 112 est que l'adresse de session 111 est différente de celle 105 contenue dans l'enregistrement 109. Cette deuxième réponse signifie qu'un utilisateur s'est connecté une première fois, puis une deuxième fois à Intemet avec cette carte 103. Dans ce cas, le procédé de gestion du site 102 prévoit, selon l'invention, d'effectuer l'oblitération réelle de X unités contenues dans la carte 103. Cette oblitération correspond au paiement dû suite aux consommations effectuées au cours de la première session, avec l'adresse 105. Une fois cette oblitération effectuée sur la carte 103, au cours d'une étape 113, on modifie dans l'enregistrement 109 les informations concernant l'adresse de session, 111 au lieu de 105, la date de début de la session, t0' au lieu de t0, ainsi que le solde en début de session, N-X au lieu de N. Par ailleurs, on remet à 0 la cinquième zone de comptage des consommations.

Une session sur le site 102 correspond donc à la durée pendant laquelle des consommations successives, sans paiement, ont été réalisées. Une session est donc liée à une adresse de session donnée, 105 ou 111. Une session peut néanmoins être définie d'une autre façon, selon les critères d'acceptation testés à la deuxième question 110. En effet, étant donné que le paiement des services n'a lieu qu'à une connexion suivante sur le site 102, il faudrait éventuellement pouvoir prévenir des situations dans lesquelles un utilisateur resterait connecté indéfiniment sur le réseau Internet et sur le site 102, situation dans laquelle un utilisateur conserverait indéfiniment une même adresse de session. De préférence, la validité de l'accès peut résulter d'une gestion de la durée maximale de connexion sur le site 102, ou d'une gestion de la quantité maximale de services pouvant être prélevée sur le site 102 au cours d'une session, ou encore d'une déconnexion du site à une certaine fréquence, par exemple tous les jours. La durée maximale de connexion au site 102, par exemple une heure, est accessible par ce que, dans la troisième zone, on a pris soin de mémoriser la date t0 de début de la connexion au site. La gestion de la quantité maximale peut être fixée au solde, soit N-X unités au démarrage de la deuxième session. La quantité maximale peut aussi être figée et être inférieure, ou supérieure au solde N-X. Dans ce dernier cas on autorise éventuellement un découvert.

La validité de l'accès peut être évaluée à chaque nouvelle consommation. En effet, la base de données 100 enregistre au fur et a mesure les consommations de la session en cours.

Les paramètres de la deuxième question 110 peuvent être modifiés et sont choisis par le possesseur du site 102. Par exemple, on peut autoriser des consommations dépassant le pouvoir d'achat conféré par la carte 103 dans une certaine limite. Dans le cas où des découverts seraient tolérés, lors d'une connexion ultérieure, la carte 103 ne contiendrait alors pas assez d'unités pour pouvoir payer les consommations de la session précédente. Dans ce cas, le site 102 ou un autre opérateur peut proposer de recharger la carte 103 de manière à ce que cette carte 103 puisse permettre à nouveau d'accéder au site 102. Pour favoriser ce système de recharge de la carte 102, on peut prévoir une bonification de la recharge. Cette bonification peut être supérieure à un dépassement moyen de consommation en fin de validité de la carte 103.

Dans un autre exemple d'utilisation du procédé de gestion selon l'invention, une même carte prépayée 103 peut donner accès à plusieurs sites distincts 102, 114, 115 tous capables de gérer ou de faire gérer la mémoire 32 du système central 100. Ces sites distincts gèrent ainsi des informations concernant la carte à puce 103 dans une même base de données. Ainsi, une consommation effectuée sur un site 102 au cours d'une session 105 pourra être débitée lors d'une session ultérieure 111 de connexion avec l'un des autres sites 114, ou 115.

Les répartitions des unités consommées, et la rétribution de la fourniture de service par chacun des gestionnaires des sites 102, 114 et 115 peut être organisée de la manière suivante. Soit un contrat arbitraire définit des quotes parts. Soit ces quotes parts sont évaluées avec des indicateurs de fréquentation fournis par chacun des sites Soit encore ces indicateurs de fréquence sont mémorisés dans la mémoire 32 qui peut identifier les sites origines des consommations. Dans ce cas, une sixième zone de l'enregistrement 109 comporte, en regard des informations de consommation X, les références (102) du site par lequel les services ont été fournis à une session précédente. En même temps que la quatrième zone de solde est mise à jour, et ou que la cinquième zone de consommation est remise à zéro, les X unités consommées sont ajoutées dans une autre table (par exemple elle aussi dans la mémoire 32) à un total d'unités consommées sur le site 102. Ainsi, le site 114 peut par exemple être le comptable pour le site 102 des services que celui-ci avait préalablement fournis.

## Revendications

1. Procédé de gestion à distance de la délivrance d'un service disponible sur le réseau Internet par un système comportant dans l'ordre les étapes suivantes:
- au début d'une session de consommation, un utilisateur introduit une carte (14) à puce munie d'unités prépayées qu'il détient et contenues dans la carte ou dans un fichier du système correspondant à la carte dans une borne en relation avec le système et qui gère l'accès au service,
- la borne lit la carte à puce, puis autorise un accès au service,
- le système mesure la consommation de service de la session et produit et mémorise (32) un message relatif à cette mesure,
- au cours d'une lecture suivante de la même carte à puce le système enregistre ce message dans un fichier (26) en relation avec la carte à puce,
**caractérisé en ce que**
- la lecture suivante de la même carte à puce se produit préalablement au début d'une deuxième session de consommation de service, et **en ce que** le message est un message de décompte d'unités prépayées disponibles contenues dans la carte ou dans un fichier du système correspondant à la carte.

2. Procédé selon la revendication 1 **caractérisé en ce que** la deuxième session de consommation concerne d'un service différent de celui consommé à la session de consommation précédente.

3. Procédé selon l'une des revendications 1 à 2 **caractérisé en ce qu'**on fixe une limite de consommation pour chaque session de consommation de services.

## Patentansprüche

1. Fernverwaltungsverfahren zum Bereitstellen eines Dienstes über das Internet durch ein System mit den Schritten in der folgenden Reihenfolge:
- zu Beginn einer Nutzung führt ein Nutzer eine Chipkarte (14) mit vorausbezahlten Einheiten, die er besitzt und die in der Karte oder in einer Datei des Systems zu der Karte enthalten sind, in einen Anschluss ein, der mit dem System zusammenhängt und den Zugang zu der Dienstleistung verwaltet,
- der Anschluss liest die Chipkarte und gibt dann den Zugang zu dem Dienst frei,
- das System erfasst den Nutzungsumfang der Dienstleistung während der Nutzung und erzeugt und speichert (32) eine Nachricht in Zusammenhang mit dieser Erfassung,
- im Verlauf eines folgenden Lesevorgangs derselben Chipkarte schreibt das System diese Nachricht in eine Datei (26) mit Bezug auf die Chipkarte,
**dadurch gekennzeichnet, dass**
- der folgende Lesevorgang derselben Chipkarte vor dem Beginn einer zweiten Nutzung des Dienstes erfolgt und
- die Nachricht eine Nachricht ist, in der vorausbezahlte, verfügbare Einheiten in der Karte oder in einer Datei des Systems zu der Karte abgezogen werden.

2. Verfahren nach Anspruch 1,
**dadurch gekennzeichnet, dass**
- die zweite Nutzung einen anderen Dienst betrifft als den bei der vorangehenden Nutzung.

3. Verfahren nach Anspruch 1 oder 2,
**dadurch gekennzeichnet, dass**
- man eine Nutzungsbeschränkung für jede Nutzung von Diensten festlegt.

## Claims

1. Procedure for the remote management of the delivery of a service available on the Internet by a system comprising the following phases in the specified order:
- at the start of a usage session the user introduces a smart card (14) which he possesses and which has prepaid units contained on the card or in a file on a system corresponding to the card in a terminal connected to the system which manages access to the service;
- the terminal reads the smart card then authorises access to the service;
- the system measures the use made of the system during the session and produces and memorises (32) a message relating to that measurement;
- during the next reading of the same smart card the system records this message in a file (26) associated with the smart card,
**characterised in that**
- the next reading of the same smart card occurs prior to the start of the second session of use of the service, and **in that** the message is a message containing a count of the prepaid units available and contained in the card or in a system file corresponding to the card.

2. Procedure according to Claim 1 **characterised in that** the second session of use concerns a different service from that used during the previous session

3. Procedure according to either of Claims 1 and 2 **characterised in that** a usage limit is fixed for each session of use of services.
